# EUROPEAN PATENT APPLICATION

(11) **EP 4 280 425 A1**
(43) Date of publication of application: **22.11.2023**
(21) Application number: 22173410.6
(22) Date of filing: 16.05.2022
(51) Int. Cl.: H02K 1/20, H02K 7/18, H02K 1/14

(54) **COOLING OF A STATOR SEGMENT**

(71) Applicant: Siemens Gamesa Renewable Energy A/S, 7330 Brande (DK)
(72) Inventor: Nilifard, Reza, 5000 Odense C (DK)
(74) Representative: SGRE-Association

(57) **Abstract**

Stator segment (20) comprising:
a yoke (21),
at least one tooth (22) extending in a radial direction (R) from the yoke (21),
at least one coil winding (23) being at least partially wound around the tooth (22) and being at least partially in contact with a first circumferential outer surface (31) of the tooth (22), and
at least one radial groove (24) arranged at the first circumferential outer surface (31).

## Description

### Field of invention

The present invention relates to a configuration for air cooling a stator segment of a stator, in particular for direct drive permanent magnet generators in wind turbines.

### Art Background

Stator segments for direct drive permanent magnet generators used in wind turbines normally comprise a yoke section, a tooth extending from the yoke in a radial direction, a coil winding, which is wound around the tooth and which is at least partially in contact with an outer surface in a circumferential direction of the tooth and a plurality of circumferentially extending radial air ducts for providing an air cooling system of the stator segment.

Such radial air ducts extending in a circumferential direction are not optimal, as the cooling airflow has a low contact surface with the windings wound around the stator segment, so that the cooling performance might be affected, in particular when higher winding temperatures are reached as a result of higher powers reached by the wind turbine.

Another disadvantage of the air ducts extending in a circumferential direction, is that spacers need to be inserted in the ducts, in order to avoid that the deformation of the laminated metal blocks impairs the passage of the cooling air in the air ducts.

Such non-optimal cooling performance has a negative impact on the efficiency of the stator segment as well as on its lifespan.

### Summary of the invention

There may therefore be a need for a stator segment with an improved cooling performance.

This need may be met with a stator segment according to a first aspect of the present invention.

According to a first aspect of the present invention, a stator segment is provided. The stator segment comprises a yoke, at least one tooth extending in a radial direction from the yoke, at least one coil winding being at least partially wound around the tooth and being at least partially in contact with a first circumferential outer surface of the tooth, and at least one radial groove arranged at the first outer surface.

According to a second aspect of the present invention, a stator comprising one or more stator segments according to the first aspect of the present invention is provided.

According to a third aspect of the present invention, an electric generator comprising a rotor and a stator according to the second aspect of the present invention is provided. The rotor is rotatable with respect to the stator about a rotation axis.

According to a fourth aspect of the present invention, a wind turbine comprising an electric generator according to the third aspect of the present invention is provided.

In the context of the present invention, an "axial direction" refers to a direction which is parallel with a rotary axis of the rotor of the generator.

In the context of the present invention, a "radial direction" denotes a direction perpendicular to the rotary axis, wherein the radial direction runs through the rotary axis.

In the context of the present invention, a "circumferential direction" denotes a direction around the rotary axis.

In the context of the present document, a "circumferential outer surface" of the tooth denotes an external surface of the tooth in a plane defined by the axial and the radial directions and being perpendicular to the circumferential direction.

In the context of the present invention, a "radial groove" is a groove cut in the first circumferential outer surface of the tooth and cutting through both the tooth and the yoke, so to create an air duct. The radial groove has a depth in the circumferential direction which is smaller than the tooth extension in the circumferential direction.

According to the present invention, therefore, an air duct having a greater contact surface with the coil winding is provided. Consequently, an improved heat transfer from the coil, and thus an improved cooling of the stator segment, can be achieved.

Another advantage of the present invention is that the radial groove preserves more material in the yoke and the tooth, as it does not extend circumferentially. Thus, the stator segment has a higher mechanical stability, and the generator can operate with higher torque densities with a lower risk of failing due to material strength issues.

Beside this, this design may reduce the cost of the segment production because there is no need for spacers inside of the radial grooves to maintain the distance between lamination stacks for air passage and prevent lamination and groove's deformation or blockage.

According to an embodiment, a plurality of radial grooves is arranged at the first circumferential outer surface. It is therefore possible, through a higher number of distributed radial grooves, to maximize the cooling effect of the coil and maintaining a sufficient mechanical stability of the stator segment, thus allowing higher torque densities.

According to another embodiment at least one further radial groove is provided at a second circumferential outer surface of the tooth opposite to the first circumferential outer surface. In this case, it is possible to provide both outer surfaces of the tooth in a circumferential direction with at least one, and preferably a plurality of, radial groove. In this configuration, it is possible that the at least one coil winding or that another coil winding is at least partially wound around the tooth and is at least partially in contact with the second circumferential outer surface of the tooth.

According to an embodiment, the first circumferential outer surface and the second circumferential outer surface have the same number of radial grooves. In this configuration, the radial grooves are provided in equal number on both the first circumferential outer surface and the second circumferential outer surface, so that the colling on both surfaces is maximized.

In the above configuration, the radial grooves can be built symmetrically or asymmetrically with respect to a central axis of the stator segment, which is parallel to the axial direction. In a symmetric configuration, the stator segment has an equal cooling effect on both the first circumferential outer surface and the second circumferential outer surface and an improved exchangeability is provided.

In an asymmetric configuration, the radial grooves may have a different width or a different depth from each other. This may be useful to optimize the cooling of the stator segment, for example by changing the geometry of the radial grooves in the middle of the stator segment.

According to an embodiment, the distance along the axial direction of two consecutive radial grooves at the first circumferential outer surface and of two consecutive radial grooves at the second circumferential outer surface is constant, wherein the radial grooves at the first circumferential surface and the radial grooves at the second outer surface are displaced from each other by a displacement distance along the axial direction, wherein the displacement distance is smaller than the distance along the axial direction of two consecutive radial grooves.

In the above configuration, it is therefore possible to have a stator segment with an improved magnetic flux density distribution due to the asymmetric distribution of the radial grooves along the first circumferential outer surface and the second circumferential outer surface.

According to an embodiment, at least one radial groove comprises a first portion and a second portion, wherein the first portion has a first width and the second portion has a second width.

In the present document, a "width" of the radial groove is dimension of the groove along the axial direction.

In other words, according to this embodiment, the width of the radial groove is variable along the radial direction. With such variable geometry along the radial direction it is possible to maximize the cooling efficiency.

The radial groove may also include more than two portions, each having its own width. It might also be the case, that the radial groove has a continuously variable width along the radial direction.

According to an embodiment, the first portion is a portion of the radial groove corresponding to the tooth and the second portion is a portion of the radial groove corresponding to the yoke, wherein the first width is greater than the second width.

According to this configuration, the flow of the cooling air in the radial groove is improved by accelerating the flow in the portion of the radial groove corresponding to the yoke, thus improving the heat removal capability of the cooling air flow.

Another advantage of the present configuration is that in the region corresponding to the yoke the magnetic flux density distribution can be improved due to the smaller width, thus providing an improved performance of the stator segment.

According to an embodiment, at least one radial groove comprises a first portion and a second portion, wherein the first portion has a first depth and the second portion has a second depth.

In the present document, a "depth" of the radial groove is dimension of the groove along the circumferential direction.

In other words, according to the present embodiment, the depth of the radial groove is variable along the radial direction. With such variable geometry along the radial direction it is possible to maximize the cooling efficiency.

The radial groove may also include more than two portions, each having its own depth. It might also be the case, that the radial groove has a continuously variable depth along the radial direction.

According to an embodiment, the first portion is a portion of the radial groove corresponding to the tooth and the second portion is portion of the radial groove corresponding to the yoke, wherein the second depth is greater than the first depth. In this configuration, the cooling air flow is accelerated in the portion of the radial groove corresponding to the tooth, so to increase the heat removal capability of the cooling air flow.

According to an embodiment, a distance between two consecutive radial grooves along the axial direction is constant. In this case, it is possible to equally distribute the radial grooves along the stator segment, so to improve an even het removal from the stator segment along an axial direction.

According to an embodiment, a distance between two consecutive radial grooves along the axial direction is different. In such case it is possible to modify the distance between two consecutive radial grooves along the axial direction for improving heat removal from particularly sensitive regions of the stator segment. It is for example possible to increase the heat removal in the middle of the stator segment or near to the outer surfaces along an axial direction.

According to an embodiment, the stator segment comprises a plurality of teeth extending in a radial direction from the yoke, wherein two consecutive teeth are separated from each other by a coil groove and wherein the at least one coil winding is arranged in two coil grooves being consecutive to each other in a circumferential direction. In such configuration, the at least one coil winding is arranged in two consecutive coil grooves surrounding a single tooth. This is the so-called "concentrated winding" or "concentrated" configuration. The stator segment according to the present invention is particularly useful for usage in concentrated configurations, where higher temperatures are present, as in concentrated configurations two coil windings wound around two consecutive teeth may be arranged in one coil groove.

According to an embodiment, the stator segment comprises a plurality of teeth extending in a radial direction from the yoke, wherein two consecutive teeth are separated from each other by a coil groove and wherein the at least one coil winding is arranged in two coil grooves being non-consecutive to each other in a circumferential direction. In such configuration, the at least one coil winding is arranged in two non-consecutive coil grooves surrounding a single tooth. This is the so-called "distributed winding" or "distributed" configuration.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine including an electric generator according to the present invention.
- Figure 2: shows a stator segment comprising one tooth extending radially from a yoke according to an embodiment of the present invention.
- Figure 3: shows an enlarged view of a portion of the stator segment according to Figure 2 along a radial direction.
- Figure 4: shows an enlarged view of a portion of a stator segment according to another embodiment along a radial direction.
- Figure 5: shows a section along a line V-V of Figure 3.
- Figures 6 and 7: show a section along a line VI-VI of Figure 3 of two possible embodiments of a stator segment according to present invention.
- Figures 8 and 9: show a section along a line VIII-VIII of Figure 3 of two possible embodiments of a stator segment according to present invention.

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

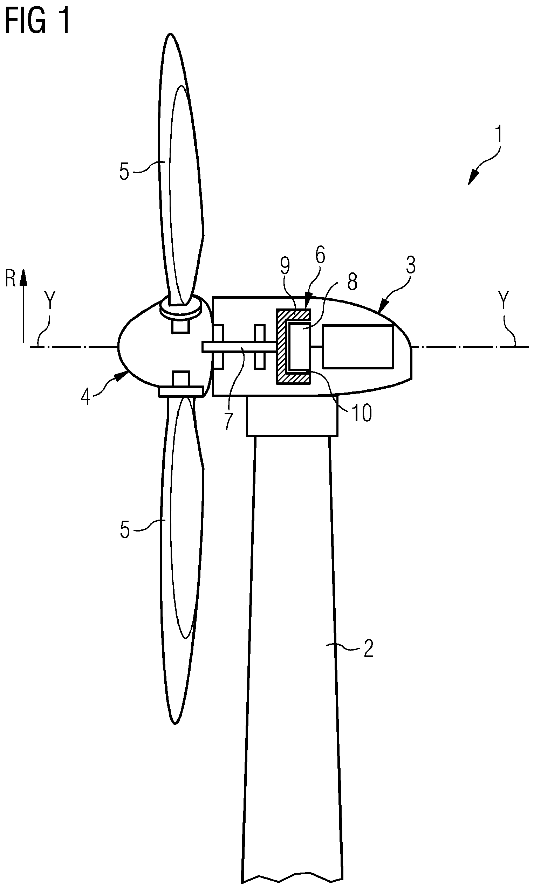

**Figure** 1 shows a wind turbine 1 according to the invention. The wind turbine 1 comprises a tower 2, which is mounted on a non-depicted fundament. A nacelle 3 is arranged on top of the tower 2. The wind turbine 1 further comprises a wind rotor 4 having two, three or more blades 5 (in the perspective of Figure 1 only two blades 5 are visible). The wind rotor 4 is rotatable around a longitudinal rotation axis Y, which is coincident with an axial direction, also referred to as Y. When not differently specified, the terms axial, radial and circumferential in the following are made with reference to the longitudinal axis Y. The blades 5 extend radially in a radial direction R with respect to the rotational axis Y. The wind turbine 1 comprises a permanent magnet electric generator 6. According to other possible embodiments of the present invention (not represented in the attached figures), the present invention may be applied to other types of electric machine design, e.g. induction, synchronous, etc. The wind rotor 4 is rotationally coupled with the permanent magnet generator 6 by means of a rotatable main shaft 7. The rotatable main shaft 7 extends along the rotational axis Y. According to other possible embodiments of the present invention (not represented in the attached figures), the wind rotor 4 is rotationally coupled directly with the permanent magnet generator 6 (direct-drive generator configuration). The permanent magnet electric generator 6 includes a stator 8 and a rotor 9. The rotor 9 is rotatable with respect to the stator 8 about the rotation axis Y. The rotor 9 is radially external with respect the stator 8 and rotatable about the rotational axis Y. The present invention may however also include not-shown embodiments in which the rotor 9 is radially internal with respect to the stator 8. A circumferential air gap 10 is provided between the stator 8 and the rotor 9.

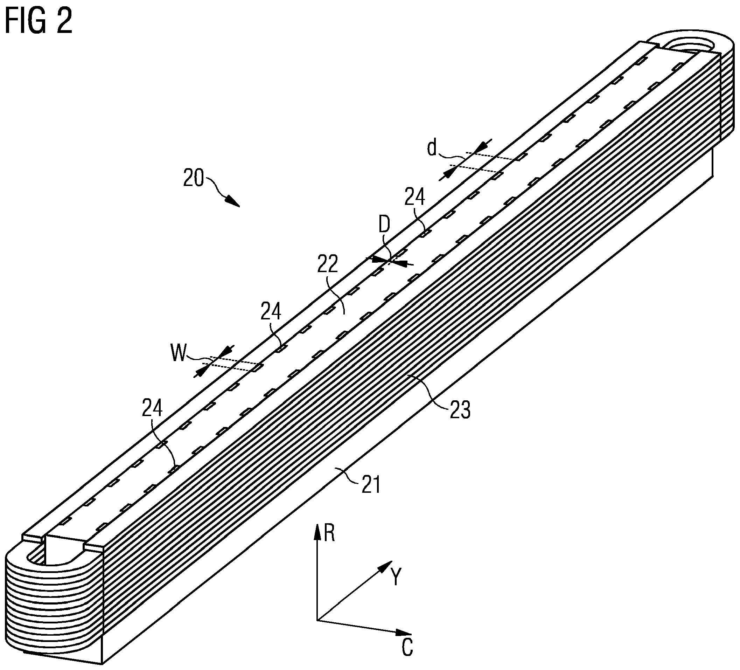

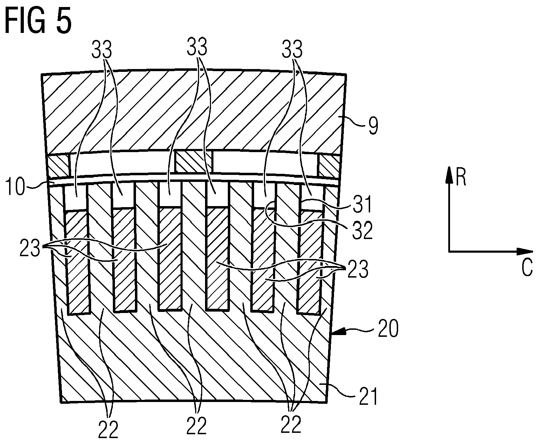

**Figure 2** shows a perspective view of a stator segment 20 according to an embodiment of the present invention. For the sake of simplicity, the stator segment 20 of **Figure 2** comprises only one tooth 22 extending in a radial direction R from a yoke 21. The invention however also comprises the case in which a stator segment 20 comprises a plurality of teeth 22 extending in a radial direction R from the yoke 21 (see **Figure 5****).**

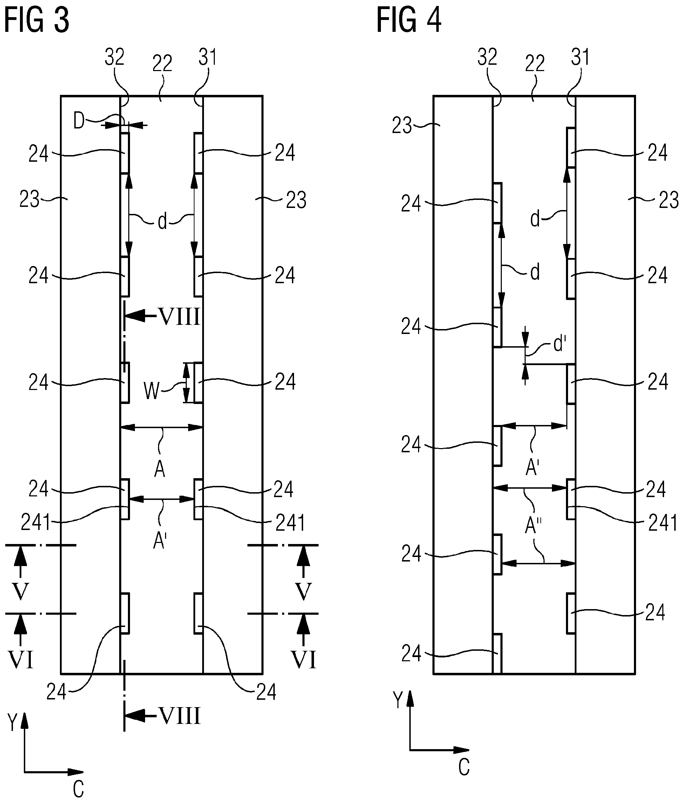

In **Figure 2** a coil winding 23 is wound around the tooth 22 and the coil winding 23 is in contact with a first circumferential outer surface 31 (see **Figure 3****)** of the tooth 22 and with a second circumferential outer surface 32 (see **Figure 3****)** of the tooth 22.

In the stator segment 20 according to **Figure 2****,** a plurality of radial grooves 24 arranged at both the first circumferential outer surface 31 and at the second circumferential outer surface 32 are provided.

In the embodiment according to **Figure 2****,** an equal number of radial grooves 24 are provided at the first circumferential outer surface 31 and at the second circumferential outer surface 32. Furthermore, the radial grooves 24 are equidistant from each other along the first circumferential outer surface 31 and the second circumferential outer surface 32, since two consecutive radial grooves 24 have a constant distance d from each other. Furthermore, all the radial grooves 24 according to **Figure 2** have the same width W and the same depth D.

In other words, the stator segment 20 according to **Figure 2** is symmetrically built with respect the axial direction Y.

The present invention however also comprises the case in which the distance d between two consecutive radial grooves 24 in an axial direction Y is not constant and/or where the depth D and/or the width of the radial grooves 24 varies among the radial grooves 24.

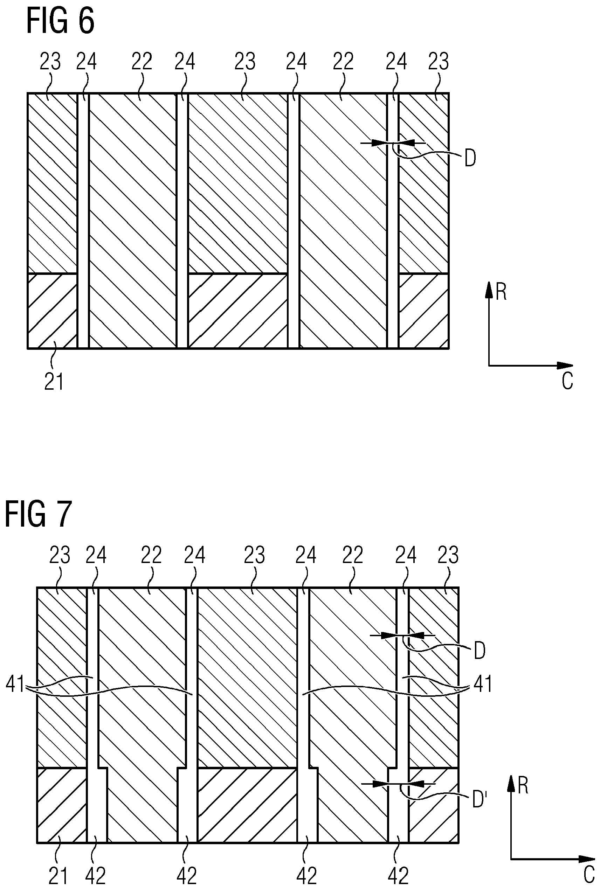

**Figure 3** shows an enlarged view of a portion of the stator segment 20 according to **Figure 1** along a radial direction R. In **Figure 3** it is clear how the radial grooves 24 are built symmetrically on both circumferential outer surfaces 31, 32 of the tooth 22. In other words, in the embodiment according to **Figure 3****,** a radial groove 24 on the first circumferential outer surface faces another radial groove 24 on the second circumferential outer surface. A distance between bottom surfaces 241 of two radial grooves facing each other is A'. This distance A' is less than the width A of the tooth 22. Also, the distance A' is equal to the difference between the width A of the tooth 22 and two times the depth D of the radial groove 24. In the embodiment according to **Figure 3****,** the radial grooves 24 may have uniform widths W and depths D or may have variable widths W, W' and/or variable depths D, D' along a radial direction (see **Figures 6** to **9****).**

**Figure 4** shows an enlarged view of a portion of a stator segment 20 according to another embodiment along a radial direction R. In the embodiment according to **Figure 4** the radial grooves 24 at the first circumferential outer surface 31 and the radial grooves 24 at the second circumferential surface are displaced along an axial direction of a displacement distance d', wherein the displacement distance d' is less than the distance d between two radial grooves 24 at the same circumferential outer surface 31, 32. In other words, in the embodiment according to **Figure 4****,** radial grooves 24 are provided at the first circumferential outer surface 31 and at second circumferential outer surface 32, wherein the radial grooves 24 at the first circumferential surface 31 and the radial grooves 24 at the second outer surface 32 are displaced from each other by a displacement distance d' along an axial direction, wherein the displacement distance d' is smaller than a distance d between two consecutive radial grooves 24 at the first circumferential outer surface 31 or at the second circumferential outer surface 32 along an axial direction Y.

Therefore, in the embodiment according to **Figure 4****,** the width A'', representing the distance between a bottom surface 241 of the radial groove 24 and a circumferential outer surface 32, 31 opposing the circumferential outer surface 31, 32 at which the radial groove 24 is provided, is greater than the width A'. Consequently, the tooth 22 according to **Figure 4** has the advantage that an improved magnetic flux density distribution can be obtained with respect to the embodiment showed in **Figure 3****.**

**Figure 5** shows a section along the line V-V in **Figure 3****,** wherein the stator segment 20 comprises a plurality of teeth 22 radially extending from a yoke 21.

Between two consecutive teeth 22 of the stator segment 20 there is a coil groove 33, in which the coil winding 23 is located. If the coil winding 23 is arranged in two grooves 33 being consecutive to each other in a circumferential direction C, then the stator segment has a so-called concentrated configuration. If, on the contrary, the coil winding 23 is arranged in two grooves 33 being non-consecutive to each other in a circumferential direction C, then the stator segment has a so-called distributed configuration. The stator segment 20 according to the present invention can be used both in a concentrated as well as in a distributed configuration.

**Figures 6** and **7** show a section view along the line VI-VI in **Figure 3****,** wherein the stator segment 20 comprises a plurality of teeth 22 radially extending from a yoke 21.

In the embodiment according to **Figure 6****,** the radial grooves 24 all have the same depth D. In **Figure 7****,** each of the radial grooves 24 has a first portion 41 and a second portion 42, wherein the first portion has a first depth D and the second portion has a second depth D', wherein the second depth D' is greater than the first depth D. The first portion 41 is a portion of the radial groove 24 corresponding to the tooth 22 and the second portion 42 is portion of the radial groove 24 corresponding to the yoke 21. Therefore, in the embodiment according to **Figure 7****,** the radial groove 24 is deeper in a portion corresponding to the yoke for improving the cooling effect.

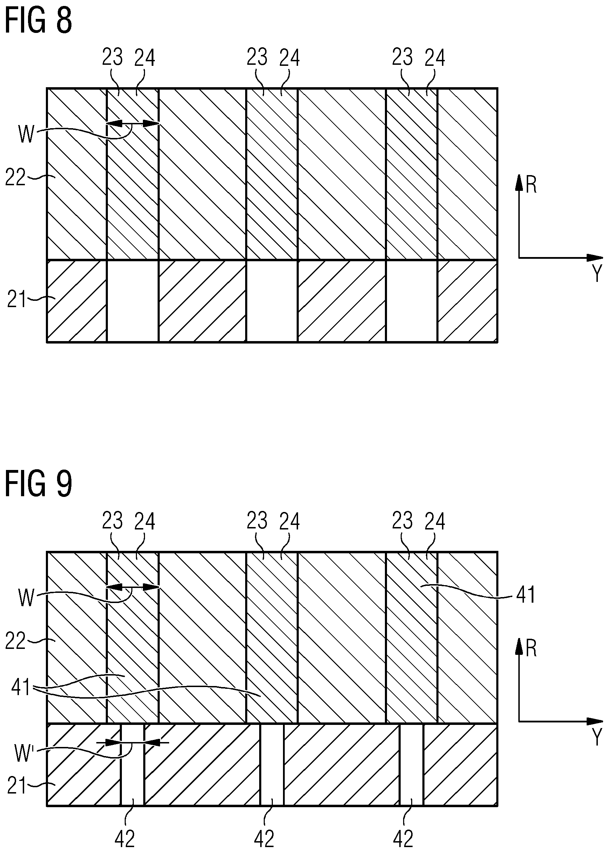

**Figures 8** and **9** show a section view along the line VIII-VIII of **Figure 3****,** wherein the stator segment 20 comprises a plurality of teeth 22 radially extending from a yoke 21.

In the embodiment according to **Figure 8****,** the radial grooves 24 all have the same width W. In **Figure 9****,** each of the radial grooves 24 has a first portion 41 and a second portion 42, wherein the first portion has a first width W and the second portion has a second width W', wherein the first width W is greater than the second width W'. The first portion 41 is a portion of the radial groove 24 corresponding to the tooth 22 and the second portion 42 is portion of the radial groove 24 corresponding to the yoke 21. Therefore, in the embodiment according to **Figure 9****,** the radial groove 24 is wider in a portion corresponding to the coil winding 23 for improving the cooling effect.

It is also possible, though not shown, that the radial grooves 24 have more than two portions having different widths and/or depths.

Also, it is possible, that the radial grooves 24 are different from each other in terms of their width and/or depth, for enhancing the cooling effect of the radial groove at particularly critical places of the stator segment 20.

## Claims

1. Stator segment (20) comprising:
a yoke (21),
at least tooth (22) extending in a radial direction (R) from the yoke (21),
at least one coil winding (23) being at least partially wound around the tooth (22) and being at least partially in contact with a first circumferential outer surface (31) of the tooth (22), and
at least one radial groove (24) arranged at the first circumferential outer surface (31).

2. Stator segment (20) according to claim 1, wherein a plurality of radial grooves (24) is arranged at the first circumferential outer surface (31).

3. Stator segment (20) according to claim 1 or 2, wherein at least one further radial groove (24) is provided at a second circumferential outer surface (32) of the tooth (22) being opposite to the first circumferential outer surface (31).

4. Stator segment (20) according to claim 3, wherein the first circumferential outer surface (31) and the second circumferential outer surface (32) have the same number of radial grooves (24).

5. Stator segment (20) according to claim 4, wherein a distance (d) along the axial direction (Y) of two consecutive radial grooves (24) at the first circumferential outer surface (31) and of two consecutive radial grooves (24) at the second circumferential outer surface (32) is constant, and wherein the radial grooves (24) at the first circumferential surface (31) and the radial grooves (24) at the second outer surface (32) are displaced from each other by a displacement distance (d') along the axial direction (Y), wherein the displacement distance (d') is smaller than the distance (d) along the axial direction (Y) of two consecutive radial grooves (24) at the first circumferential outer surface (31) and of two consecutive radial grooves (24) at the second circumferential outer surface (32).

6. Stator segment (20) according to any of the preceding claims, wherein at least one radial groove (24) comprises a first portion (41) and a second portion (42), wherein the first portion (41) has a first width (W) and the second portion (42) has a second width (W').

7. Stator segment (20) according to claim 6, wherein the first portion (41) is a portion of the radial groove (24) corresponding to the tooth (22) and the second portion (42) is a portion of the radial groove (24) corresponding to the yoke (21) and wherein the first width (W) is greater than the second width (W').

8. Stator segment (20) according to any of the preceding claims, wherein at least one radial groove (24) comprises a first portion (41) and a second portion (42), wherein the first portion (41) has a first depth (D) and the second portion (42) has a second depth (D').

9. Stator segment (20) according to claim 8, wherein the first portion (41) is a portion of the radial groove (24) corresponding to the tooth (22) and the second portion (42) is portion of the radial groove (24) corresponding to the yoke (21) and wherein the second depth (D') is greater than the first depth (D).

10. Stator segment (20) according to any of the preceding claims, wherein a distance (d) between two consecutive radial grooves (24) along the axial direction (Y) is different.

11. Stator segment (20) according to any of the preceding claims, wherein the stator segment (20) comprises a plurality of teeth (22) extending in a radial direction (R) from the yoke (21), wherein two consecutive teeth (22) are separated from each other by a coil groove (33) and wherein the at least one coil (23) winding is arranged in two coil grooves (33) being consecutive to each other in a circumferential direction (C).

12. Stator segment (20) according to any of the claims 1 to 10, wherein the stator segment (20) comprises a plurality of teeth (22) extending in a radial direction (R) from the yoke (21), wherein two consecutive teeth (22) are separated from each other by a coil groove (33) and wherein the at least one coil winding (23) is arranged in two coil grooves (33) being non-consecutive to each other in a circumferential direction (C) .

13. Stator (8) comprising one or more stator segments (20) according to one of the claims 1 to 9.

14. Electric generator (6) comprising a rotor (9) and a stator (8), wherein the rotor (9) is rotatable with respect to the stator (8) about a rotation axis (Y) and wherein the stator (8) is a stator according to claim 13.

15. Wind turbine (1) comprising an electric generator (6) according to claim 14.
